# FASCICULE DE BREVET EUROPEEN

(11) **EP 3 812 144 B1**
(45) Date de publication et mention de la délivrance du brevet: **19.07.2023**
(21) Numéro de dépôt: 20203978.0
(22) Date de dépôt: 26.10.2020
(51) Int. Cl.: B32B 3/12, B32B 7/10, B32B 27/08, B32B 27/32

(54) **FILM D'ISOLATION MULTICOUCHE LOGISTIQUE ET SON PROCÉDÉ DE FABRICATION**
MEHRSCHICHTIGE ISOLIERFOLIE FÜR LOGISTISCHE ANWENDUNG, UND IHR HERSTELLUNGSVERFAHREN
LOGISTICS MULTI-LAYER INSULATING FILM AND MANUFACTURING METHOD THEREOF

(30) Priorité: 24.10.2019 FR 1911948; 07.11.2019 FR 1912510
(43) Date de publication de la demande: 28.04.2021
(73) Titulaire: CID Plastiques, 34130 Valergues (FR)
(72) Inventeur: CEBRON, Marina, 34670 BAILLARGUES (FR)
(74) Mandataire: Rhein, Alain

(56) Documents cités:
- WO-A1-2012/024549
- WO-A1-2019/152718
- GB-A- 2 501 053

## Description

La présente invention entre dans le domaine des solutions d'isolation logistiques. Plus particulièrement, la présente invention entre dans le domaine des films d'isolation logistiques.

Ces films d'isolation sont notamment utilisés dans le transport pour calorifuger et/ou capitonner des supports de chargement et/ou de transport tels que des containers ou des palettes de marchandises. Une des fonctions principales de ce type de film d'isolation est de prévenir toutes variations de température importantes telles qu'un choc thermique, lors du chargement, du transport, du transbordement ou du déchargement de marchandises.

Des solutions techniques existent déjà et sont largement diffusées dans le domaine de l'isolation logistique. Dans ce contexte, il est possible de recenser au moins trois solutions techniques différentes.

Une première solution technique consiste à isoler un support de chargement et/ou de transport à l'aide d'une enveloppe de carton alvéolé. En pratique, des panneaux en carton alvéolé sont assemblés de manière à former une enveloppe isolante du support de chargement et/ou de la marchandise. Plus spécifiquement un panneau de carton alvéolé d'isolation logistique comporte un corps central constitué de carton alvéolé, le corps central étant recouvert de part et d'autre par une couche externe composée de polyéthylène téréphtalate (PET) métallisé. Cette solution technique possède de bonnes propriétés calorifuges. Cependant, cette solution est peu répandue essentiellement à cause du coût de fabrication onéreux des panneaux en carton alvéolé. De surcroît, le recyclage de cette solution nécessite une étape préalable de séparation du corps central et de ses couches externes. Cette étape de séparation peut être techniquement délicate et rend le recyclage d'un panneau de carton alvéolé d'isolation logistique onéreuse, elle est donc peu rentable.

Une deuxième solution technique, plus répandue, consiste à isoler un support de chargement et/ou de transport avec une enveloppe de polystyrène expansé. Cette solution technique présente également l'avantage d'être efficace d'un point de vue de l'isolation thermique. La fabrication du polystyrène expansé est par ailleurs bon marché. Cependant, l'impact environnemental du polystyrène expansé est important, son caractère diffus limite les volumes recyclés de ce matériau. Par ailleurs, le polystyrène est un matériau stable dans le temps, on estime sa durée de vie dans la nature de l'ordre de mille ans. De surcroît, le polystyrène expansé libère du pentane qui est un gaz à effet de serre qui contribue également à l'étiolement de la couche d'ozone. Le bilan écologique de ce matériau constitue un inconvénient majeur dans le cadre d'une économie de développement durable.

Une troisième solution technique porte sur un film bulle d'isolation logistique qui comporte un corps central complexé de part et d'autre avec une couche externe constituée d'un film 100% aluminium. Cette solution est également efficace, mais elle présente l'inconvénient de consommer une quantité importante de film aluminium et par conséquent d'être onéreuse. De la même façon, l'usage d'un film multicouche d'isolation thermique comprenant plusieurs couches de différents matériaux présente l'inconvénient de nécessiter une opération de séparation des couches pour envisager de recycler le produit en fin de vie. Dès lors, la plupart du temps ce type de film est mis au rebus sans qu'un processus de recyclage soit mis en place.

Une quatrième solution technique est également répandue, elle consiste également en un film multicouche d'isolation. Dans ce cas, le film multicouche d'isolation comporte un corps central constitué d'un film bulle central de polyéthylène (PE) complexé de part et d'autre par un film de polyéthylène téréphtalate (PET) métallisé. Le film bulle de polyéthylène peut comporter une ou plusieurs couches de bulles, et les bulles peuvent comporter un diamètre variant de 5 mm à 30 mm en fonction des marchandises que l'on souhaite protéger. Ce film PET métallisé possède une épaisseur de 12 µm. De plus, ce film bulle d'isolation comprend une armature qui recouvre chaque film de polyéthylène téréphtalate métallisé. L'armature est ajoutée pour réduire les risques de déchirement du polyéthylène téréphtalate métallisé qui possède de mauvaises propriétés d'élasticité. Dans la plupart des cas, l'armature est formée par une grille de polyéthylène recouverte par un film en polyéthylène qui permet de réduire le risque de déchirement du film PET métallisé. De manière générale, l'armature en polyéthylène représente une surépaisseur de 18 µm par rapport au PET métallisé.

Ce type de film bulle d'isolation présente l'avantage de posséder, d'une part, un bon pouvoir calorifuge conféré essentiellement par le film bulle central de PE, et d'autre part, une bonne réflexivité des rayonnements IR et UV qui est conférée par les couches latérales de PET métallisé. Ces deux propriétés et un coût de fabrication peu onéreux font de cette solution un bon compromis.

Cependant, le bilan écologique de ce film bulle d'isolation est loin d'être vertueux. En effet, bien que le PE et PET soit tous deux des matériaux recyclables l'un indépendamment de l'autre, leur complexation l'un à l'autre dans le cadre d'un tel film bulle d'isolation, rendent le recyclage de ce film bulle d'isolation délicat et onéreux. Dans la pratique, il est nécessaire de séparer les différentes couches de ce film bulle d'isolation, de les rassembler par nature et ensuite de les broyer pour les réutiliser. Or, l'étape de séparation s'avère complexe et rend le processus de recyclage non rentable. Il ressort de tout cela, que le pourcentage de film bulle d'isolation recyclé est faible, ce qui ne permet pas à ce film bulle d'isolation de s'inscrire dans une démarche industrielle de développement durable.

Par ailleurs, il est à noter que lorsque le film bulle d'isolation PET-PE est utilisé pour l'isolation de containeurs, le film bulle d'isolation PET-PE est déchiré la plupart du temps lors du déchargement du container. Dans ce contexte, ce film bulle d'isolation PET-PE peut être considéré comme un film à usage unique qui une fois déchiré constitue un déchet. Lorsque le film bulle d'isolation PET-PE est utilisé pour calorifuger des supports de chargement tels que des palettes, des cartons etc., celui-ci est en moyenne réutilisé 2 à 3 fois avant de constituer un déchet. Dans le contexte de ces deux utilisations, le film bulle PET-PE n'est pas recyclé dans 98% des cas au regard des problématiques que nous avons présentées précédemment.

Il ressort ainsi de cet état des lieux que les films d'isolation multicouche comprenant un corps central complexé à des couches externes présentent une durée de vie courte avant d'être mis au rebus et les procédés de recyclage de ces films ne sont généralement pas mis en place pour des questions de rentabilité de l'opération de recyclage.

On connait par ailleurs par, le document WO 2012/024549, un film à bulle multicouche isolant comprenant sur ses deux côtés externes un film métallisé. Le corps central de ce film à bulle est lui-même un complexe de deux couches de film à bulle entre lesquels s'étend un film polymérique métallisé.

Au regard de ces problématiques, la demanderesse a développé une solution technique recyclable au bilan écologique vertueux tout en possédant à minima des propriétés calorifuges équivalentes aux solutions existantes.

Dans cet objectif, un premier aspect de la présente invention concerne un film d'isolation multicouche comprenant un corps central formé par au moins une couche de film bulle en polyéthylène. Le film d'isolation multicouche selon l'invention se caractérise en ce qu'il comprend deux couches externes de polyéthylène métallisé qui s'étendent respectivement de part et d'autre du corps central et qui sont complexées au corps central, chaque couche externe possède une épaisseur comprise entre 10 µm et 40 µm et une élongation à la rupture supérieure à 100% selon deux directions perpendiculaires l'une à l'autre.

Le fait de concevoir les couches externes du film bulle d'isolation en polyéthylène permet de conserver les propriétés d'isolation thermique du film d'isolation multicouche et de réduire les coûts liés au recyclage en fournissant un film d'isolation multicouche mono-matériau. Un tel film d'isolation multicouche peut être recyclé par broyage pour former des granulés de polyéthylène utilisables pour fabriquer un nouveau film de même type ou d'autres produits en polyéthylène. Par ailleurs, les propriétés d'élasticité de chaque couche externe lui confèrent une meilleure résistance déchirure et par conséquent une plus grande durée d'utilisation.

Selon une première caractéristique du premier aspect de l'invention, chaque couche externe de polyéthylène métallisé est mate.

Selon une deuxième caractéristique du premier aspect de l'invention, chaque couche externe de polyéthylène métallisé est complexée au corps central par thermocollage, de préférence, le thermocollage est effectué à une température comprise entre 122°C et 126°C, de préférence, le thermocollage est effectué à une température comprise entre 123°C et 125°C.

Selon une troisième caractéristique du premier aspect de l'invention, chaque couche externe possède une épaisseur comprise entre 15 µm et 35 µm, et de préférence, chaque couche externe possède une épaisseur comprise entre 20 µm et 30 µm.

Selon une quatrième caractéristique du premier aspect de l'invention, chaque couche externe 4 comporte un film métallique qui possède une épaisseur comprise entre 250 Å et 500 Â, le film métallique donnant, au polyéthylène de la couche externe, son caractère métallisé.

Selon une cinquième caractéristique du premier aspect de l'invention, chaque couche externe comporte un indice de réflexivité compris entre 85 % et 95% aux rayons IR et UV.

Selon une sixième caractéristique du premier aspect de l'invention, chaque couche externe comporte une densité optique dont la valeur est comprise entre 2,0 et 2,2.

Il est à noter que la densité optique et l'indice de réflexivité sont des propriétés le caractère isolant du film selon l'invention. Ces deux propriétés sont liées à l'épaisseur, mais aussi, au caractère métallisé, de la couche externe.

Selon une septième caractéristique du premier aspect de l'invention, au moins, le corps central est issu à au moins 30% de polyéthylène rebroyé, de préférence, au moins, le corps central est issu à au moins 40% de polyéthylène rebroyé et de préférence, au moins, le corps central est issu à au moins 50% de polyéthylène rebroyé. Selon l'invention, le polyéthylène rebroyé peut être issu d'un film d'isolation multicouche mono-matériau en polyéthylène, ou d'une autre source de polyéthylène. Tant les chutes d'usines qu'un film usagé peuvent convenir pour constituer le polyéthylène recyclé ou rebroyé.

Un second aspect de l'invention concerne un procédé de fabrication d'un film bulle d'isolation conforme au premier aspect de l'invention, au moins le corps central étant issu à au moins 30% de polyéthylène rebroyé. Le procédé selon l'invention se caractérise en ce qu'il comporte au moins : une opération de broyage d'au moins un film mono-matériau en polyéthylène, cette opération transformant du film polyéthylène en granulés recyclés de polyéthylène.

Avantageusement, le procédé permet de former un film bulle d'isolation multicouche mono-matériau conforme à l'invention en utilisant du polyéthylène recyclé issu d'un film d'isolation conforme du premier aspect de l'invention. Ce procédé permet d'inscrire la production de film d'isolation logistique dans une démarche de renouvellement durable.

En outre, le procédé selon l'invention comprend une étape d'assemblage du corps central avec chaque couche externe par une opération de thermocollage, l'opération de thermocollage étant effectuée à une température comprise entre 122°C et 126°C, de préférence, l'opération de thermocollage est effectuée à une température comprise entre 123°C et 125°C

De plus l'opération de thermocollage est facilitée par l'utilisation d'un corps central et de couches externes qui sont réalisées en polyéthylène.

Le procédé de fabrication comprend également une étape de formation du corps central, cette étape étant réalisée par :
- une opération d'extrusion de granulés de polyéthylène comprenant au moins 30% de granulés de polyéthylène rebroyé, de préférence, les granulés de polyéthylène comportent au moins 40% de polyéthylène rebroyé, et de préférence, les granulés de polyéthylène comportent au moins 50% de polyéthylène rebroyé ;
- une opération de filage du polyéthylène extrudé afin de former un film de polyéthylène, l'opération de filage étant réalisée au travers d'une filière ;
- une opération d'embossage d'un premier film de polyéthylène issu de l'opération de filage, générant des cavités à intervalles réguliers qui sont précurseurs des bulles d'un film bulles du corps central ; et
- une opération d'assemblage du premier film de polyéthylène embossé avec un second film de polyéthylène issu de l'opération de filage, l'opération d'assemblage étant réalisée par thermocollage à une température comprise entre 122°C et 126°C, de préférence, le thermocollage étant effectué à une température comprise entre 123°C et 125°C, cette opération permettant d'obtenir un corps central formé d'une couche de film bulle.

D'autres particularités et avantages apparaitront dans la description détaillée qui suit, de deux exemples de réalisation, non limitatifs, de l'invention qui sont illustrés par les figures 1 à 4 placées en annexe et dans lesquelles :

[Fig. 1] est une représentation schématique d'une coupe du film d'isolation multicouche conforme à un premier exemple de réalisation de l'invention.

[Fig. 2] est une représentation schématique d'une coupe du film d'isolation multicouche conforme à un second exemple de réalisation de l'invention.

[Fig. 3] est un graphique comparant le comportement d'un film d'isolation multicouche conforme à l'invention avec un film de l'état de l'art au cours d'un test de convection forcée.

[Fig. 4] est une représentation schématique du cycle de vie du film d'isolation multicouche selon l'invention.

La présente invention concerne un film 1 multicouche pour l'isolation logistique. Ce film d'isolation multicouche 1 est un film bulle d'isolation. En particulier, le film d'isolation multicouche 1 est utilisé dans le transport pour calorifuger et/ou capitonner des supports de chargement et/ou de transport tels que des containers ou des palettes de marchandises.

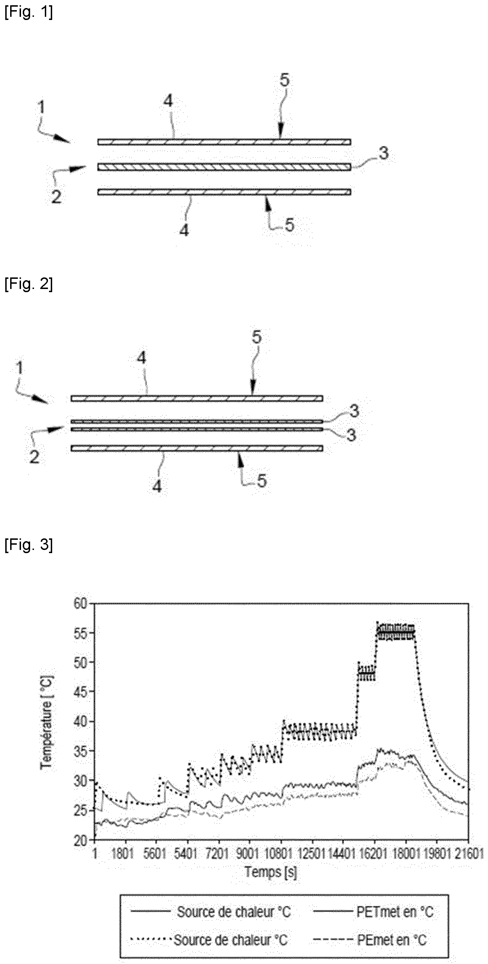

Dans cette optique et comme cela est illustré aux figures 1 et 2, le film d'isolation multicouche 1 d'isolation comprend un corps central 2 qui est formé par au moins une couche de film bulle 3. Selon l'invention, la couche de film bulle 3 est réalisée en polyéthylène. A titre d'exemple, la couche de film bulle 3 peut comprendre du polyéthylène à basse densité et/ou du polyéthylène à basse densité linéaire et/ou un mélange des deux.

De la même façon, en fonction de son application, le film d'isolation multicouche 1 d'isolation possède un corps central 2 qui peut comprendre une couche 3 de film bulle 3 ou plusieurs couches de film bulle 3.

Dans l'exemple de la figure 1, le film d'isolation multicouche 1 d'isolation possède un corps central 2 constitué d'une couche de film bulle 3. Selon cette configuration, le corps central 2 possède une épaisseur d'au moins 80 µm. A titre indicatif, il est possible d'utiliser ce type de film d'isolation multicouche 1 pour des marchandises peu sensibles thermiquement comme de l'eau minérale.

Dans l'exemple de la figure 2, le film d'isolation multicouche 1 d'isolation possède un corps central 2 constitué de deux couches de film bulle 3. Selon cette configuration, le corps central 2 possède une épaisseur d'au moins 100 µm. De préférence, les bulles de chaque couche sont agencées de manière décalée. A titre indicatif, il est possible d'utiliser ce type de film d'isolation multicouche 1 pour des marchandises sensibles thermiquement telles que des produits chimiques inflammables.

Cependant, il est à noter, comme pour l'art antérieur, que l'épaisseur du corps central 2 peut également varier en fonction des dimensions des bulles de la couche de film bulle 3. En effet, les dimensions des bulles peuvent varier en fonction de la destination du film d'isolation multicouche 1. Dans ce contexte et à titre d'exemple, le diamètre des bulles peut varier de 5 mm à 30 mm en fonction des marchandises que l'on souhaite protéger.

Il est à noter qu'il est également possible de concevoir un film d'isolation multicouche 1 dont le corps central 3 comporte trois ou quatre couches de film bulle 3.

Comme illustré aux figures 1 et 2, le film d'isolation multicouche 1 comprend deux couches externes 4 qui s'étendent respectivement de part et d'autre du corps central 2. Dans cet exemple, les deux couches externes 4 sont complexées au corps central 2. Cela signifie que les deux couches externes 4 sont solidarisées au corps central 2.

Selon l'invention, chaque couche externe 4 est réalisée en polyéthylène métallisé. L'utilisation du polyéthylène métallisé pour réaliser chaque couche externe 4 permet de produire un film d'isolation multicouche 1 mono-matériau. Or, le caractère mono-matériau permet de recycler directement le film d'isolation multicouche 1 par un broyage direct. Nous nous affranchissons ainsi de l'étape de séparation des différents matériaux du film bulle d'isolation de l'art antérieur qui rend son recyclage non rentable économiquement. L'objectif du broyage est de former des flocons de polyéthylène recyclés qui sont transformés en granulés de polyéthylène recyclés au travers. Les granulés de polyéthylène recyclés peuvent être ensuite réutilisés pour former un nouveau film d'isolation multicouche 1 ou tout autre produit en polyéthylène.

En ce sens, le film d'isolation multicouche 1 peut être considéré comme un film d'isolation mono-matériau. Ce film peut être plus particulièrement destiné pour l'isolation logistique.

Il est à noter que la métallisation du polyéthylène s'obtient par condensation d'un métal vaporisé sur un film de polyéthylène disposé à plat. Selon l'invention, la couche externe 4 comprend un film métallique fin. Le film métallique est appliqué sur la face extérieure d'une couche externe 4. Le film métallique possède une épaisseur comprise entre 250 Å et 500 Å (Angstrom). De préférence, le film métallique qui possède une épaisseur comprise entre 300 Å et 400 Å. Encore de préférence, le film métallique qui possède une épaisseur comprise entre 350 Å et 380 Â. Le film métallique peut comprendre de l'aluminium connu pour sa légèreté et largement utilisé en matière d'isolation.

Le polyéthylène téréphtalate métallisé (ci-après PETmet) utilisé pour former chaque couche externe d'un film d'isolation multicouche de l'art antérieur possède une surface extérieure brillante. A l'inverse, chaque couche externe 4 de polyéthylène métallisé (ci-après PEmet) utilisée dans le cadre de l'invention possède une face extérieure 5 mate. Or, le brillant et le mat sont des caractéristiques opposées d'une couleur, le brillant est connu pour refléter la lumière alors que le mat l'absorbe. Au regard de ce constat, il est évident de supposer qu'un film de couleur mat possède de moins bonnes performances d'isolation thermique par rapport à un rayonnement calorifique et/ou lumineux. En vue de conserver, des propriétés d'isolation thermique similaires, il n'est ainsi pas évident de substituer le polyéthylène téréphtalate métallisé brillant par du polyéthylène métallisé mat.

Cependant, contrairement à ces idées reçues, le PEmet mat possède des propriétés optiques équivalentes à celles du PETmet brillant. Le tableau 1 ci-dessous illustre cette constatation. En particulier, le tableau 1 compare la réflexivité au rayons IR et UV du PEmet mate par rapport au PETmet brillant pour des épaisseurs déterminées.

**Tableau 1**

| | Epaisseur film en µm | Densité optique | Réflexivilité en % | |
|---|---|---|---|---|
| | | | face intérieure | face extérieure |
| Polyéthylène téréphtalate métallisé brillant | 12 | 2,0 à 2,2 | 95 | 52 |
| Polyéthylène métalisé mate | 30 | 2,0 à 2,2 | 95 | 85 |

Le tableau 1 nous permet de constater qu'un film de PEmet mat qui présente une épaisseur supérieure à l'épaisseur d'un film PETmet brillant, possède une densité optique légèrement inférieure. Ici, la couche externe 4 comporte une densité optique dont la valeur est comprise entre 2,0 et 2,2. La densité optique du PEmet mate est valable pour des épaisseurs variants entre 20 et 40 µm,

Cependant, s'agissant de la réflexivité, la face extérieure, correspondant à la face sur laquelle une fine couche de métal a été déposée, d'un film PEmet mat possède une réflexivité identique à celle du PETmet brillant. A l'inverse, la face intérieure, opposée de la face extérieure, d'un film PEmet mat possède une réflexivité supérieure de plus de 30% par rapport au PETmet brillant. De ce fait, chaque couche externe 4 du film d'isolation multicouche 1, selon l'invention, comporte un indice de réflexivité compris entre 85 % et 95%.

La figure 3 est un graphique comparatif entre le PEmet mat de 30 µm d'épaisseur et le PETmet brillant de 12 µm d'épaisseur. D'un point de vue expérimental, chaque film est placé dans un caisson qui comporte, d'un côté une source de chaleur configurée pour réaliser une convection forcée et une première sonde de température, et de l'autre côté une seconde sonde de température. Chaque film est positionné entre les deux côtés de manière à isoler le deuxième côté du premier côté où se situe la source de chaleur. Ainsi, la première sonde de température mesure la chaleur appliquée au film et la seconde sonde de température mesure la température du côté du caisson qui est isolé par le film. Le profil thermique d'une journée est simulé en démarrant le matin à température ambiante, suivie d'une augmentation de température pour le milieu de journée, et enfin une coupure de la convection forcée pour reproduire la fin de journée.

Selon ce protocole expérimental, le graphique illustre le comportement de chacun de ces films dans des conditions de convection calorifique forcées simulées au cours d'une journée. Ce graphique montre que ces deux matériaux ont un comportement relativement similaire lorsqu'ils sont soumis à des températures comprises entre 25°C et 30 °C. En revanche, lorsqu'ils sont soumis à des températures comprises entre 30°C et 55°C, le PEmet mat monte moins en température que le PETmet brillant. Selon ce graphique, le PEmet mat s'avère plus efficace, dans des conditions de températures extrêmes.

L'avantage en termes de recyclage que procure l'utilisation du PEmet mat en substitution du PETmet brillant vient contrebalancer la nécessité de fournir un film de PEmet mat plus épais que le film PETmet brillant utilisé pour les films bulles d'isolation de l'art antérieur. De plus, bien qu'il faille fournir un film de PEmet mat plus épais, son épaisseur reste de l'ordre du micron et permet d'obtenir des films d'isolation multicouche 1 inférieurs à 200 µm d'épaisseur.

De surcroît, le tableau 2 ci-après illustre les propriétés d'élasticité (élongation à la rupture) du PEmet mat par rapport au PETmet brillant pour une épaisseur de film déterminée. Comme cela est illustré par le tableau 2, pour une épaisseur supérieure le PEmet mat possèdent des propriétés d'élongation à la rupture supérieures à celles du PETmet brillant. Ces propriétés d'élongation à la rupture confèrent au PEmet mat une plus grande élasticité par rapport au PETmet brillant. En conséquence, il est possible de supprimer l'armature de polyéthylène utilisée dans l'art antérieur pour renforcer le PETmet brillant.

**Tableau 2**

| | Epaisseur film en µm | Elongation à la rupture en % | |
|---|---|---|---|
| | | Longitudinale | Transversale |
| Polyéthylène téréphtalate métallisé brillant | 12 | 84 | 55 |
| Polyéthylène métalisé mate | 30 | 173 | 108 |

L'élongation à la rupture est mesurée selon la méthode ASTM D882.

De ce fait, la couche externe 4 du film d'isolation multicouche 1 selon l'invention conserve au final une épaisseur similaire à celle d'une couche externe d'un film bulle d'isolation de l'art antérieur. Ceci est illustré au tableau 3 ci-dessous dans lequel nous avons comparé les épaisseurs qui sont exprimées en micromètre (µm) de chaque couche d'un film d'isolation multicouche 1 selon l'invention avec les épaisseurs de chaque couche d'un film d'isolation multicouche conforme à l'art antérieur.

**Tableau 3**

| | | Film bulle d'isolation selon l'invention | Film bulle d'isolation de l'art antérieur |
|---|---|---|---|
| Epaisseur corps central | | 80 | 80 |
| Couche Externe | Film PEmet métallisé mate | 30 x 2 | / |
| | Film PETmet métallisé Brillant | / | 12 x2 |
| | Armature PE | / | 18 x2 |
| Epaisseur totale du film bulle d'isolation | | 140 | 140 |

Cette comparaison a été établie pour une épaisseur du corps central 2 de 80 µm. Comme nous l'avons indiqué plus haut, l'épaisseur du corps central 2 du film d'isolation multicouche 1 selon l'invention est susceptible de varier.

Par ailleurs, selon l'exemple du tableau 3, la couche externe 4 est uniquement constituée de PEmet mat. Selon le tableau 3, chaque couche externe 4 mesure 30 µm d'épaisseur. Toutefois, chaque couche externe 4 peut posséder une épaisseur comprise entre 10 µm et 40 µm. De préférence, chaque couche externe 4 possède une épaisseur comprise entre 15 µm et 35 µm, et de préférence, chaque couche externe 4 possède une épaisseur comprise entre 20 µm et 30 µm.

Comme cela est illustré au tableau 2, pour une telle plage d'épaisseur, le couche externe 4 constituée de PEmet mat comporte une élongation à la rupture supérieure à 100% tant longitudinalement que transversalement. Ainsi, la couche externe 4 possède une élongation à la rupture supérieure 100% selon deux directions perpendiculaires l'une à l'autre. Il est à noter que le longitudinalement, l'élongation à la rupture est supérieure à 150%. Alors même, que l'épaisseur de la couche externe 4 selon l'invention est plus importante que l'épaisseur de la couche externe en PETmet brillant qui est de l'ordre de 12 µm, l'élasticité (élongation à la rupture) de la couche externe 4 en PEmet mat est plus importante. De fait, la couche externe 4 selon l'invention est moins sujette au déchirement que la couche externe de l'état de la technique.

Selon l'invention, le corps central 2 est issu à au moins 30% de polyéthylène rebroyé. De préférence, le corps central 2 est issu à au moins 40% de polyéthylène rebroyé. De préférence, le corps central 2 est issu à au moins 50% de polyéthylène rebroyé. De préférence, le corps central 2 est issu à au moins 70% de polyéthylène rebroyé. De préférence, le corps central 2 est issu à au moins 90% de polyéthylène rebroyé.

Le polyéthylène rebroyé peut aussi être qualifié de polyéthylène recyclé.

De plus, la couche externe 4 peut également être issue à au moins 30% de polyéthylène rebroyé. De préférence, la couche externe 4 est issue à au moins 40% de polyéthylène rebroyé. De préférence, la couche externe 4 est issue à au moins 50% de polyéthylène rebroyé. De préférence, la couche externe 4 est issue à au moins 70% de polyéthylène rebroyé. De préférence, la couche externe 4 est issue à au moins 90% de polyéthylène rebroyé.

La présente invention se rapporte également à un procédé de fabrication d'un film d'isolation multicouche 1 tel que décrit précédemment.

Le procédé de fabrication d'un film d'isolation multicouche 1 selon l'invention comprend une étape de formation du corps central 2.

L'étape de formation du corps central 2 implique une opération de broyage d'un film mono-matériau en polyéthylène ou tout autre source de polyéthylène. Cette opération vise à transformer des chutes de polyéthylène en granulés recyclés. On entend par granulés recyclés, des granulés de polyéthylène issus de polyéthylène broyés. En particulier, selon l'invention il est possible de rebroyer des chutes d'usine du film d'isolation multicouche 1 et/ou de tout autre film en polyéthylène. Il est également possible d'intégrer des chutes de film d'isolation multicouche 1 pour obtenir des granulés recyclés. Un tel procédé permet d'optimiser les rendements de production et d'inscrire la production de film d'isolation dans une démarche de développement durable.

L'étape de formation du corps central 2 implique une opération d'extrusion de granulés de polyéthylène comprenant au moins 30% de granulés de polyéthylène rebroyé. De préférence, les granulés de polyéthylène comportent au moins 40% de polyéthylène rebroyé. De préférence, les granulés de polyéthylène comportent au moins 50% de polyéthylène rebroyé. De préférence, les granulés de polyéthylène comportent au moins 70% de polyéthylène rebroyé. Encore de préférence, les granulés de polyéthylène comportent au moins 90% de polyéthylène rebroyé. Idéalement, les granulés de polyéthylène comportent 100% de polyéthylène rebroyé.

Bien entendu, les granulés de polyéthylène rebroyés sont mêlés à des granulés de polyéthylène neufs issus d'un procédé de fabrication du polyéthylène connu de l'homme du métier. L'assemblage de granulés recyclés et de granulés neufs porte le mélange à 100%.

II est à noter que ces notions de pourcentage correspondent à des pourcentages massiques.

L'étape de formation du corps central 2 comporte également une opération de filage du polyéthylène extrudé afin de former un film de polyéthylène d'une épaisseur déterminée. De manière générale, cette opération de filage étant réalisée au travers d'une filière.

L'étape de formation du corps central 2 comporte une opération d'embossage d'un premier de film de polyéthylène issu de l'opération de filage, générant des cavités à intervalles réguliers qui sont précurseurs des bulles d'un film bulles 3 du corps central 2.

L'étape de formation du corps central 2 comporte une opération d'assemblage du premier film de polyéthylène embossé avec un second film de polyéthylène. De préférence le second film de polyéthylène est issu de l'opération de filage. Cette opération d'assemblage est réalisée par thermocollage à une température comprise entre 122°C et 126°C, de préférence, le thermocollage étant effectué à une température comprise entre 123°C et 125°C et de préférence le thermocollage est effectué à une température de 124°C. Cette opération d'assemblage permet d'obtenir un corps central 2 avec une couche de film bulle 3.

Afin d'obtenir un corps central 2 avec deux couches de film bulle 3, deux films bulles obtenus tels que décrits au paragraphe précédent, sont associés par une opération de thermocollage dans les conditions de thermocollage décrites précédemment. De même, pour obtenir un corps central 2 avec un nombre déterminé de couche de films bulles 3, on assemble les différentes couches de films bulles 3 par opération de thermocollage.

Le procédé de fabrication d'un film d'isolation multicouche 1 peut également comprendre une étape de formation d'un film PEmet mat. Un film de PEmet mat est fabriqué en vue de former une couche externe 4 du film d'isolation multicouche 1. Comme nous l'avons évoqué précédemment, un film de PEmet mat peut-être obtenu par un process de condensation d'un métal vaporisé sur un film de polyéthylène disposé à plat. A titre indicatif, des métaux tels que l'aluminium ou l'acier peuvent être utilisés à cet effet.

Avantageusement, le film de polyéthylène utilisé pour la formation du PEmet mat, peut être formé par des opérations d'extrusion et de filage précédemment décrit. Dans ces conditions, le film PEmet mat peut-être issu d'un mélange de granulés polyéthylène neufs et broyés tel que décrit par l'invention.

Le procédé de fabrication d'un film d'isolation multicouche 1 comporte une étape d'assemblage du corps central 2 avec chaque couche externe 4 par une opération de thermocollage. Selon l'invention, l'opération de thermocollage étant effectuée à une température comprise entre 122°C et 126°C, de préférence, l'opération de thermocollage est effectuée à une température comprise entre 123°C et 125°C.

En ce sens, chaque couche externe 4 de polyéthylène métallisé est complexée au corps central 2 par thermocollage. Le thermocollage peut être est effectué à une température comprise entre 122°C et 126°C. De préférence, le thermocollage est effectué à une température comprise entre 123°C et 125°C et de préférence le thermocollage est effectué à une température de 124°C.

Les deux couches externes 4 peuvent être assemblées simultanément ou successivement au corps central 2.

Comme indiqué dans le tableau 4 ci-dessous, le fait d'assembler un corps central 2 avec deux couches externes 4, alors que ces films sont formés de polyéthylène permet de travailler à des températures comprises entre 122°C et 124°C. Ces températures correspondent à la plage de températures de fusion du polyéthylène et permettent d'obtenir un collage optimal tout en conservant les propriétés mécaniques, optiques et thermiques de chaque couche externe 4 mais également du corps central 2.

A l'inverse, comme cela est indiqué dans le tableau 4, pour un film d'isolation de l'art antérieur, l'association d'un corps central en polyéthylène avec une couche externe formée de polyéthylène téréphtalate métallisé (PET met brillant) nécessite l'emploi de températures supérieures à 130°C. Or, lorsque l'on travaille à des températures supérieures à 130°C, les propriétés du corps central 2 en polyéthylène peuvent être dégradées.

**Tableau 4**

| | Film PEmet mate | Film PETmet Brillant |
|---|---|---|
| Transition vitreuse en °C | -110 | 70 |
| Point de fusion en °C | 85 à 140 | 245 |

L'utilisation du PEmet mat permet en outre d'optimiser le procédé de fabrication du film bulle 1 d'isolation notamment au cours de l'étape d'assemblage du corps central 2 avec chaque couche externe 4. Mais également lors de l'étape de formation du film bulle 3 qui forme le corps central 2.

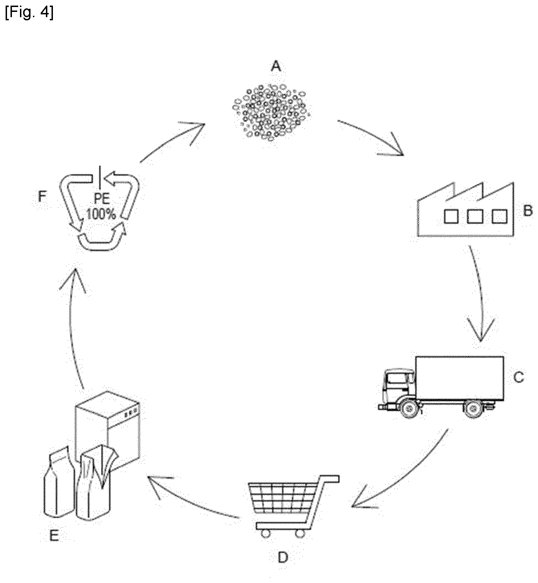

La figure 4 illustre le cycle de vie vertueux du film d'isolation multicouche 1 selon l'invention.

Au niveau de l'étape A le polyéthylène se trouve sous la forme de granulés dont un pourcentage défini par l'invention est issu d'un broyage de polyéthylène. L'étape B constitue la mise en oeuvre du procédé de fabrication du film d'isolation multicouche 1. Les étapes C et D représentent la commercialisation et le transport du film d'isolation multicouche 1 par exemple vers un expéditeur de marchandise. L'étape E correspond à l'utilisation du film d'isolation multicouche 1, par exemple, par un expéditeur de marchandise.

L'étape F correspond à la fin de vie du film d'isolation multicouche 1 après son utilisation. Le passage de l'étape F à l'étape A se fait par broyage du film d'isolation multicouche 1 afin de le transformer en granulés recyclés, qui seront utilisés pour fabriquer un nouveau film d'isolation multicouche 1 ou un autre produit en polyéthylène.

L'intégration de granulés recyclés, issus de films d'isolation multicouche 1 selon l'invention, est rendu possible par le caractère mono-matériau du film d'isolation multicouche 1 conforme de l'invention. Toutefois, il est aussi possible d'utiliser d'autres sources de polyéthylène pour former des granulés recyclés.

Le tableau 5 ci-dessous compare différentes étapes de fabrication d'un film d'isolation multicouche dont le corps central est issu de granulés purs, c'est-à-dire, de granulés de polyéthylène non recyclés, avec un film d'isolation multicouche conforme de l'invention dont le corps central est constitué de 40 % en masse de granulés de polyéthylène rebroyés et 60% en masse de granulés de polyéthylène non recyclés,

**Tableau 5**

| | **Planéité du film** | **Extrusion** | **Thermocollage** | **Performances mécaniques** |
|---|---|---|---|---|
| Granulés purs | 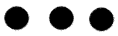 | 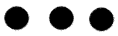 | 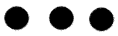 | 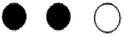 |
| Granulés recyclés | 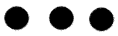 | 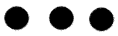 | 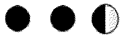 | 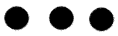 |

Selon le tableau 5, il a été observé que la planéité du film d'isolation multicouche 1 comprenant du polyéthylène recyclé était de qualité comparable à la planéité d'un film d'isolation multicouche issu entièrement de granulés non recyclés. Lors de l'étape d'extrusion, les granulés recyclés se comportent de façon équivalente aux granulés neufs d'un point de vue thermique et mécanique. Il a également été observé une délamination légèrement plus facile de la couche externe 4 du corps central 2 en ce qui concerne le film d'isolation qui comprend un corps central fabriqué à partir d'un mélange de granulés recyclés et non recyclés. Toutefois, la résistance à la délamination reste du même ordre que pour le corps central issu à 100% de non recyclé.

Toutefois, il a été constaté de meilleures performances mécaniques en ce qui concerne le film d'isolation multicouche 1 dont le corps central comporte du polyéthylène recyclé. En effet, le film présente une meilleure élongation à la rupture, au choc et à la fissuration à froid.

## Revendications

1. Film d'isolation multicouche (1) comprenant un corps central (2) formé par au moins une couche de film bulle (3) en polyéthylène, **caractérisé en ce qu'**il comprend deux couches externes (4) de polyéthylène métallisé qui s'étendent respectivement de part et d'autre du corps central (2) et qui sont complexées au corps central (2), chaque couche externe (4) possède une épaisseur comprise entre 10 µm et 40 µm et une élongation à la rupture supérieure à 100% selon deux directions perpendiculaires l'une à l'autre, mesurée en accord avec la norme ASTM D882.

2. Film d'isolation multicouche (1) selon revendication 1, **caractérisé en ce que** chaque couche externe (4) de polyéthylène métallisé est mate.

3. Film d'isolation multicouche (1) selon l'une des revendications 1 et 2, **caractérisé en ce que** chaque couche externe (4) de polyéthylène métallisé est complexée au corps central (2) par thermocollage.

4. Film d'isolation multicouche (1) selon l'une des revendications 1 à 3, **caractérisé en ce que** chaque couche externe possède une épaisseur comprise entre 15 µm et 35 µm, et de préférence, chaque couche externe possède une épaisseur comprise entre 20 µm et 30 µm.

5. Film d'isolation multicouche (1) selon l'une des revendications 1 à 4, **caractérisé en ce que**, chaque couche externe (4) comporte un film métallique qui possède une épaisseur comprise entre 250 Å et 500 Â, le film métallique donnant, au polyéthylène de la couche externe (4), son caractère métallisé.

6. Film d'isolation multicouche (1) selon l'une des revendications 1 à 5, **caractérisé en ce que**, au moins le corps central (2) étant issu à au moins 30% de polyéthylène rebroyé, de préférence, au moins, le corps central (2) est issu à au moins 40% de polyéthylène rebroyé et de préférence, au moins, le corps central (2) est issu à au moins 50% de polyéthylène rebroyé.

7. Procédé de fabrication d'un film d'isolation multicouche (1) définit selon l'une des revendications 1 à 6, au moins le corps central (2) étant issu à au moins 30% de polyéthylène rebroyé, **caractérisé en ce que** le procédé comprend au moins :
- une opération de broyage d'au moins un film mono-matériau en polyéthylène, cette opération transformant un film en polyéthylène en granulés recyclés de polyéthylène.

8. Procédé de fabrication d'un film d'isolation multicouche (1) selon la revendication 7, **caractérisé en ce qu'**il comporte une étape d'assemblage du corps central (2) avec chaque couche externe (4) par une opération de thermocollage, l'opération de thermocollage étant effectuée à une température comprise entre 122°C et 126°C, de préférence, l'opération de thermocollage est effectuée à une température comprise entre 123°C et 125°C.

9. Procédé de fabrication d'un film d'isolation multicouche (1) selon l'une des revendications 7 et 8, **caractérisé en ce qu'**il comprend une étape de formation du corps central (2), cette étape étant réalisée par :
- une opération d'extrusion de granulés de polyéthylène comprenant au moins 30% de granulés de polyéthylène rebroyé, de préférence, les granulés de polyéthylène comportent au moins 40% de polyéthylène rebroyé, et de préférence, les granulés de polyéthylène comportent au moins 50% de polyéthylène rebroyé ;
- une opération de filage du polyéthylène extrudé afin de former un film de polyéthylène, l'opération de filage étant réalisée au travers d'une filière ;
- une opération d'embossage d'un premier de film de polyéthylène issu de l'opération de filage, générant des cavités à intervalles réguliers qui sont précurseurs des bulles d'un film bulles (3) du corps central (2) ; et
- une opération d'assemblage du premier film de polyéthylène embossé avec un second film de polyéthylène issu de l'opération de filage, l'opération d'assemblage étant réalisée par thermocollage à une température comprise entre 122°C et 126°C, de préférence, le thermocollage étant effectué à une température comprise entre 123°C et 125°C, cette opération permettant d'obtenir un corps central (2) formé d'une couche de film bulle (3).

## Patentansprüche

1. [Mehrschichtige Isolierfolie (1), umfassend einen zentralen Körper (2), der aus mindestens einer Schicht aus Luftpolsterfolie (3) aus Polyethylen ausgebildet ist, **dadurch gekennzeichnet, dass** sie zwei Außenschichten (4) aus metallisiertem Polyethylen umfasst, die sich jeweils auf beiden Seiten des zentralen Körpers (2) erstrecken und mit dem zentralen Körper (2) zu einem Komplex verbunden sind, wobei jede Außenschicht (4) eine Dicke zwischen 10 µm und 40 µm und in zwei zueinander senkrechten Richtungen eine gemäß der Norm ASTM D882 gemessene Bruchdehnung von mehr als 100 % aufweist.

2. Mehrschichtige Isolierfolie (1) nach Anspruch 1,
**dadurch gekennzeichnet, dass** jede Außenschicht (4) aus metallisiertem Polyethylen matt ist.

3. Mehrschichtige Isolierfolie (1) nach einem der Ansprüche 1 und 2, **dadurch gekennzeichnet, dass** jede Außenschicht (4) aus metallisiertem Polyethylen durch Heißkleben mit dem zentralen Körper (2) zu einem Komplex verbunden ist.

4. Mehrschichtige Isolierfolie (1) nach einem der Ansprüche 1 bis 3, **dadurch gekennzeichnet, dass** jede Außenschicht eine Dicke zwischen 15 µm und 35 µm aufweist und vorzugsweise jede Außenschicht eine Dicke zwischen 20 µm und 30 µm aufweist.

5. Mehrschichtige Isolierfolie (1) nach einem der Ansprüche 1 bis 4, **dadurch gekennzeichnet, dass** jede Außenschicht (4) eine Metallfolie beinhaltet, die eine Dicke zwischen 250 Å und 500 Å aufweist, wobei die Metallfolie dem Polyethylen der Außenschicht (4) seinen metallisierten Charakter verleiht.

6. Mehrschichtige Isolierfolie (1) nach einem der Ansprüche 1 bis 5, **dadurch gekennzeichnet, dass** mindestens der zentrale Körper (2) zu mindestens 30 % aus zermahlenem Polyethylen gebildet ist, vorzugsweise mindestens der zentrale Körper (2) zu mindestens 40 % aus zermahlenem Polyethylen gebildet ist und vorzugsweise mindestens der zentrale Körper (2) zu mindestens 50 % aus zermahlenem Polyethylen gebildet ist.

7. Verfahren zur Herstellung einer mehrschichtigen Isolierfolie (1) nach einem der Ansprüche 1 bis 6, wobei mindestens der zentrale Körper (2) zu mindestens 30 % aus zermahlenem Polyethylen gebildet ist,
**dadurch gekennzeichnet, dass** das Verfahren mindestens Folgendes umfasst:
- einen Vorgang zum Mahlen mindestens einer Einstofffolie aus Polyethylen, wobei dieser Vorgang eine Polyethylenfolie in wiederverwertetes Polyethylen-Granulat umwandelt.

8. Verfahren zur Herstellung einer mehrschichtigen Isolierfolie (1) nach Anspruch 7, **dadurch gekennzeichnet, dass** es einen Schritt zum Zusammenfügen des zentralen Körpers (2) mit jeder Außenschicht (4) durch einen Heißklebevorgang beinhaltet, wobei der Heißklebevorgang bei einer Temperatur zwischen 122 °C und 126 °C durchgeführt wird, wobei der Heißklebevorgang vorzugsweise bei einer Temperatur zwischen 123 °C und 125 °C durchgeführt wird.

9. Verfahren zur Herstellung einer mehrschichtigen Isolierfolie (1) nach einem der Ansprüche 7 und 8, **dadurch gekennzeichnet, dass** es einen Schritt zur Ausbildung des zentralen Körpers (2) umfasst, wobei dieser Schritt erfolgt durch:
- einen Vorgang zur Extrusion von Polyethylen-Granulat, umfassend mindestens 30 % Granulat aus zermahlenem Polyethylen, wobei das Polyethylen-Granulat vorzugsweise mindestens 40 % zermahlenes Polyethylen beinhaltet und das Polyethylen-Granulat vorzugsweise mindestens 50 % zermahlenes Polyethylen beinhaltet;
- einen Vorgang zum Verspinnen des extrudierten Polyethylens, um eine Polyethylenfolie auszubilden, wobei der Vorgang zum Verspinnen durch eine Spinndüse hindurch erfolgt;
- einen Vorgang zum Prägen einer ersten in dem Vorgang zum Verspinnen gebildeten Polyethylenfolie, wodurch in regelmäßigen Abständen Hohlräume erzeugt werden, die Vorläufer von Blasen einer Luftpolsterfolie (3) des zentralen Körpers (2) sind; und
- einen Vorgang zum Zusammenfügen der ersten geprägten Polyethylenfolie mit einer zweiten in dem Vorgang zum Verspinnen gebildeten Polyethylenfolie, wobei der Vorgang zum Zusammenfügen durch Heißkleben bei einer Temperatur zwischen 122 °C und 126 °C erfolgt, vorzugsweise wobei das Heißkleben bei einer Temperatur zwischen 123 °C und 125 °C erfolgt, wobei dieser Vorgang gestattet, einen zentralen Körper (2) zu erhalten, der aus einer Schicht aus Luftpolsterfolie (3) ausgebildet ist.

## Claims

1. [Multilayer insulation film (1) comprising a central body (2) formed by at least one polyethylene bubble film layer (3), **characterized in that** said multilayer insulation film comprises two outer layers (4) of metalized polyethylene which extend one on either side of the central body (2) and which are complexed to the central body (2), each outer layer (4) has a thickness of between 10 µm and 40 µm and an elongation at break of greater than 100% in two mutually perpendicular directions, measured in accordance with the ASTM Standard D882.

2. Multilayer insulation film (1) according to claim 1, **characterized in that** each outer layer (4) of metalized polyethylene is matt.

3. Multilayer insulation film (1) according to either of claims 1 and 2, **characterized in that** each outer layer (4) of metalized polyethylene is complexed to the central body (2) by thermal bonding.

4. Multilayer insulation film (1) according to any of claims 1 to 3, **characterized in that** each outer layer has a thickness of between 15 µm and 35 µm, and each outer layer preferably has a thickness of between 20 µm and 30 µm.

5. Multilayer insulation film (1) according to any of claims 1 to 4, **characterized in that** each outer layer (4) comprises a metal film which has a thickness of between 250 Å and 500 Å, the metal film providing the polyethylene of the outer layer (4) its metalized property.

6. Multilayer insulation film (1) according to any of claims 1 to 5, **characterized in that** at least the central body (2) is derived from at least 30% of re-ground polyethylene, at least the central body (2) is preferably derived from at least 40% of re-ground polyethylene, and at least the central body (2) is more preferably derived from at least 50% of re-ground polyethylene.

7. Method for manufacturing a multilayer insulation film (1) defined according to any of claims 1 to 6, at least the central body (2) being derived from at least 30% of re-ground polyethylene, **characterized in that** the method comprises at least:
- an operation for grinding at least one single-material polyethylene film, this operation transforming a polyethylene film into recycled polyethylene granules.

8. Method for manufacturing a multilayer insulation film (1) according to claim 7, **characterized in that** it comprises a step of assembling the central body (2) with each outer layer (4) by a thermal bonding operation, the thermal bonding operation being carried out at a temperature of between 122°C and 126°C, the thermal bonding operation preferably being carried out at a temperature of between 123°C and 125°C.

9. Method for manufacturing a multilayer insulation film (1) according to either of claims 7 and 8, **characterized in that** it comprises a step of forming the central body (2), this step being carried out by:
- an operation for extruding polyethylene granules comprising at least 30% re-ground polyethylene granules, the polyethylene granules preferably comprising at least 40% re-ground polyethylene, and the polyethylene granules more preferably comprising at least 50% re-ground polyethylene;
- an operation for spinning the extruded polyethylene in order to form a polyethylene film, the spinning operation being performed through a spinneret;
- an operation for embossing a first polyethylene film derived from the spinning operation, generating cavities at regular intervals, which cavities are precursors for the bubbles of a bubble film (3) of the central body (2); and
- an operation for assembling the first embossed polyethylene film with a second polyethylene film derived from the spinning operation, the assembly operation being carried out by thermal bonding at a temperature of between 122°C and 126°C, the thermal bonding preferably being carried out at a temperature of between 123°C and 125°C, this operation making it possible to obtain a central body (2) formed by a bubble film layer (3).
